# EUROPEAN PATENT SPECIFICATION

(11) **EP 1 441 430 B1**
(45) Date of publication and mention of the grant of the patent: **06.05.2015**
(21) Application number: 03001238.9
(22) Date of filing: 21.01.2003
(51) Int. Cl.: H02J 3/14

(54) **A process for managing and curtailing power demand of appliances and components thereof, and system using such process**
Verfahren zur Verwaltung und zur Beschränkung des Leistungsbedarfs von Geräte und deren Komponenten, und dasselbe Verfahren gebrauchendes System
Procédé pour la gestion et la réduction de la demande de puissance d'appareils et de composants de ceux-ci, et système utilisant ce procédé

(43) Date of publication of application: 28.07.2004
(73) Proprietor: WHIRLPOOL CORPORATION, Benton Harbor Michigan 49022 (US)
(72) Inventor: Santacatterina, Gianpiero, 21025 Comerio (IT); Santinato, Matteo, 21025 Comerio (IT); Arione, Ettore, 21025 Comerio (IT); Pertigliano, Rocco, 21025 Comerio (IT)
(74) Representative: Guerci, Alessandro

(56) References cited:
- EP-A- 0 620 631
- DE-C- 19 541 869
- US-A- 4 829 159
- US-A- 5 436 510

## Description

The present invention relates to a process and a system for managing and curtailing power demand of appliances.

The main object of the present invention is to avoid or to smooth the daily power peaks. At present, the utility company reacts to power peaks in different ways, i.e. by increasing the energy cost during the peaks (this can be done only where different daily tariffs can be applied), by shutting-off entire quarter when lack of power happens, and by providing home limitation on the power loading (in certain countries when the power contract threshold is reached the home network is automatically disconnected from the main).

In order to efficiently curtail power absorption of appliances, the following constraints have to be considered: minimise the impact on appliance performance, minimise the cost of the system, minimise the user energy cost and avoid consumer restrictions.

EP-A-0620631 discloses a management system for domestic electric loads in which the programmed priority sequence of different appliances may be changed by a central unit according to state signals from the appliances.

- The process and the system according to the invention are conceptually based on smoothed power absorption of the loaders, cooperative participation of great number of users, and on-line re-planning of the energy distribution on the base of power forecast.

The process according to the invention comprises the steps of assessing for each appliance an energy consumption profile corresponding to the user's setting, comparing the energy consumption profiles in order to check if their sum leads to one or more peak in the absorbed power, and providing one or more new energy consumption profiles in order to level the total power absorbed by said appliances.

The above process involves the following three system levels: appliance level, home level which co-ordinates all home activities (such level can be managed by a special appliance control system or by a distinct control unit or power control box connected to all appliances in the house), and distribution power system level that manages the power distribution for all the connected houses. The process is based mainly on the levelling of the power consumption at appliance level. This solution, thanks to an efficient co-ordination of the internal loads, allows avoiding energy demand peaks in order to have levelled power absorption. According to the invention, the above levelling doesn't provide any limitation on appliance functionality. Another innovative feature of the process according to the present invention is the power consumption forecast. Thanks to power levelling, each appliance is able to perform a more accurate prevision on power consumption in order to provide a signal on estimated future power consumption to the utility company. For each working cycle selected by the user, the appliance is able to provide alternative cycles with lower power profile (power consumption forecast), therefore minimising the impact on product efficiency.

At home level, the system according to the invention is able to collect the power consumption forecast of several appliances, to collect in real time all the user changes and the switched-on appliances, and to level the home power consumption vs. time by co-ordinating in real time the appliance power loading. Thanks also to the power levelling activities, the system is also able to elaborate a home power plan forecast to be sent to the distribution power system. The distribution power system elaborates all the collected home forecast information, re-organises a new forecast plan and identifies on the basis of the instantaneous energy availability the directives to be sent to the connected homes.

The power management system according to the invention can collect "on line" the utility company's directives for piloting the home power management objectives, can re-plan the appliance use on the base of the utility directives and appliance priority (meant as a sort of ranking in which the different appliances or components can be curtailed), and can negotiate with each appliance the adoption of alternative lower power consumption cycle when requested.

The possibility of changing the configuration of the system is based on the following parameters at different system levels. At an appliance level, the system can be configured on the basis of appliance priorities and/or functional priorities. As far as appliance priority is concerned, on the basis of the customer use, each appliance can have a different priority, which defines the importance of the appliance in the home network (i.e. the customer can choose the appliances that can be eventually switched off when a power reduction is required). As far as the functional priority is concerned, on the basis of user preferences the appliance can re-arrange its predefined power saving strategy (i.e. the user can decide the importance of the hobs of its cook-top, consequently the appliance, when required, curtails the power, starting from the low priority hobs).

At home level, the system can be configured on the basis of contract power consumption limitation. This parameter is strictly related to the type of contract subscribed with the utility. For this reason the special control unit of the appliance or the distinct power control box provides security features (like password and anti intrusion alarms) able to protect the setting performed by utility at contract subscription. Alternatively this setting can be done also remotely though a connection with the utility distribution system.

According to the invention, the user can change the configuration parameters through the appliance user interface or through the interface of a distinct power control box. The user can directly set the appliance priority and the appliance functional priority thorough the appliance user interface. For this purpose the appliance user interface is able to store the customer settings and to recognise a predefined sequence of activities. The distinct power control box (which can be a home PC or a control circuit integral with an appliance) can have display features that help the customer in setting activities. Such power control box could share the appliance settings (appliance priority and appliance functional priority) with the appliances connected to the home network.

The power consumption limitation due to the particular contract between the user and the utility company can be managed directly (on line) by the utility power distribution system. In this case two communication layers are required: communication between the distribution power level and the home power control box and communication between the power control box and the appliances. As far as the first layer is concerned, this communication can be realised on Internet support (DSL - Digital Subscriber Line, PPP - Point to Point Protocol or GSM/UMTS) or on power line directly on the power distribution network. Alternatively for communication off line GSM (i.e. SMS) features can be supported. As far as the communication between the power control box and the appliances is concerned, for the home networking a standard communication layer can be adopted (i.e. Power Line, RF, BlueThoot).

The invention will be more apparent from the detailed description given hereinafter by way of non-limiting example with reference to the accompanying drawings, in which:

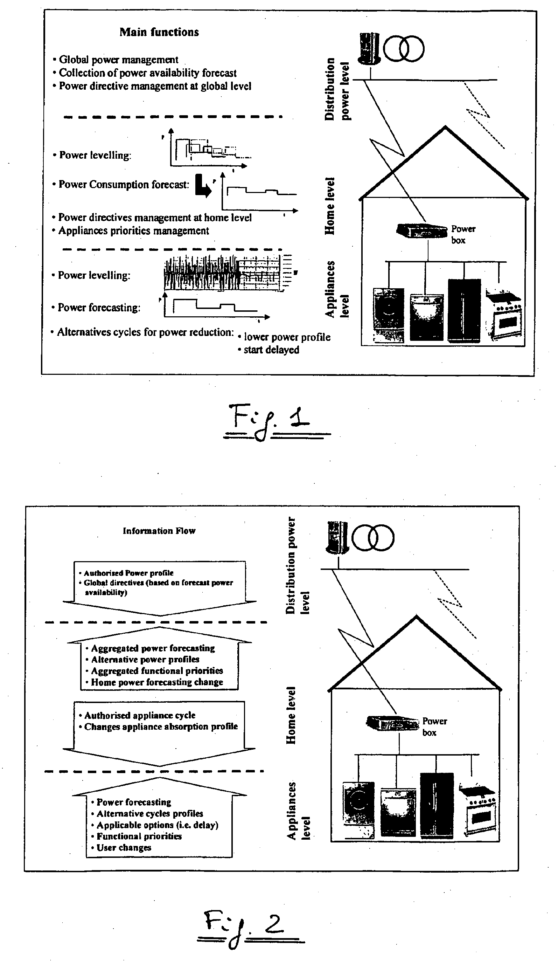

- figure 1 is a schematic diagram showing the main functions of the power management system according to the invention;
- figure 2 shows the flow of information of the system according to the invention;
- figure 3 shows schematically the system configuration;
- figure 4 shows an example of priority setting at home level;
- figures 5-7 show examples of on-off controls of different appliances or components thereof, and how they are combined together creating power absorption peaks when the system according to the invention is not used;
- figure 8 shows an example of a synchronisation of on-off cycles of different appliances, when a system according to the invention is used;
- figure 9 shows schematically how the single controls of appliance components are connected to the system according to the invention;
- figure 10 is a diagram showing how the synchronisation process is carried out;
- figure 11 shows a diagram of standard power consumption forecast compared to a reduced power consumption forecast;
- figure 12 is a diagram showing how the system works when more appliances are linked at home level;
- figure 13 is a diagram showing how a power consumption profile having a high energy demand can be transformed in a new profile according to the present invention; and
- figure 14 is a group of three graphs showing how two energy consumption profiles of different appliances can be shifted according to the invention in order to have a total energy consumption profile with lower energy demand.

The majority of the electrical appliances today on the market use electromechanical or electronic controls to perform their functions. When the user selects a function on a product (for example a temperature level on the oven), the control "regulates" the actuator controlled (for example heaters, motors, solenoid valve, etc.) in order to reach and maintain the desired functions (for example the temperature level).

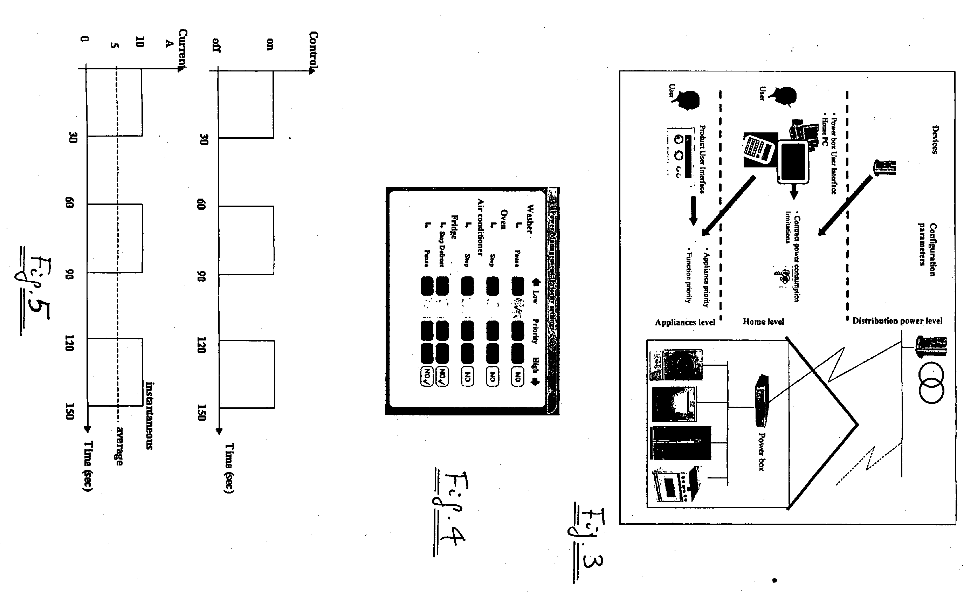

There are different methods that are used to "regulate" the actuator, depending on the type of load to be controlled (ex heaters, motors, solenoid valve, etc). The most diffused and cheaper method that is used to control the actuator, in particular the heating elements, is a low frequency ON and OFF switching. This method is very simple but generate a non-homogeneous current absorption from the mains. For example, if we have a heater with a nominal power of 2300W @ 230Vac, when it is switched on it generates a current absorption from the mains of 10A. If a control, in order to perform the required function (for example for controlling the temperature inside an oven cavity), activates the heater with a duty cycle of 50% (for example 30 sec ON and 30sec OFF), then current absorption from the main will have a similar behaviour (for example 30 sec-10A and 30 sec-0A.) as shown in figure 5. This means that there will be current peak absorption up to 10A, while the average current over a long period will be 5A.

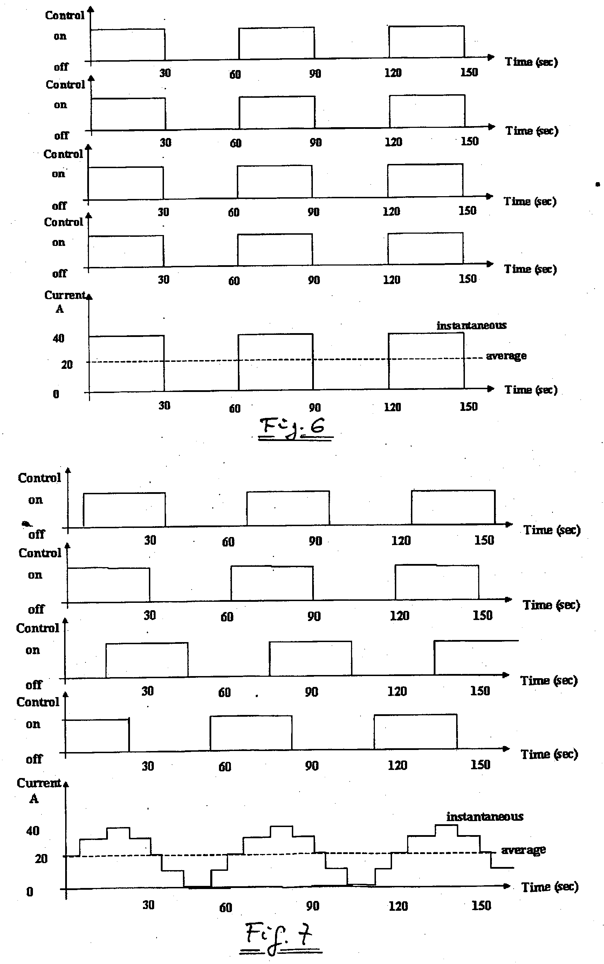

If we have a product with more than one actuator (for example a cooktop with 4 heaters of 2300W each), that uses the same ON-OFF control methodology for the control of each actuator, we obtain a current absorption from the mains that is the sum of the single actuator current, as shown in figure 6. If the actuation is carried out at the same instant, we have a very high current when all the heaters are ON, and no current when all the heaters are OFF. For example this means that there will be a current peak absorption up to 40A, while the average current over a long period will be 20A.

Normally this does not happen and the different loads are switched ON and OFF independently (i.e. at different instants), generating a current absorption that continuously changes as shown in figure 7, generating noise disturbance on the mains. While the instantaneous current profile will change, with several current peaks, the average current is the same.

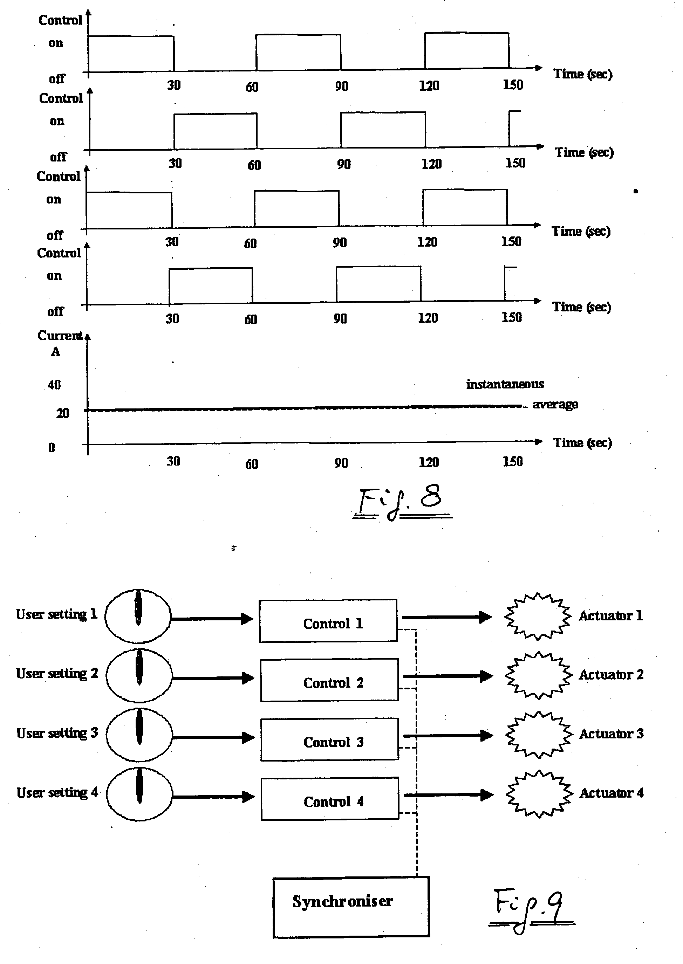

The system according to the invention organises the switching of the different loads in order to have an instantaneous current profile as much as possible similar to the average current value. This is shown in figure 8 where the different switching are properly shifted. This create a more homogeneous current absorption from the mains, with the following benefits: reduced noise on the mains (for example it reduces flicker), reduced current peak (with reduced stress on cables, switches and/or components, avoided mains shutdown, etc), simplified power consumption forecast, possibility to combine more products, etc.

According to an embodiment of the present invention, all the different controls for the different actuators are "synchronised" by a control circuit (indicated as "synchroniser" in figure 9) that organises the ON-OFF switching of the single actuator in order to limit the current peak level absorption from the mains.

Each control can decide independently the duty cycle level that need to be applied to the relative actuator in order to reach the single objective. These information are collected by the synchroniser that re-organises them on the right sequence and than re-sent them to each control for the actuation. In this way it is possible to maintain different types of control strategy.

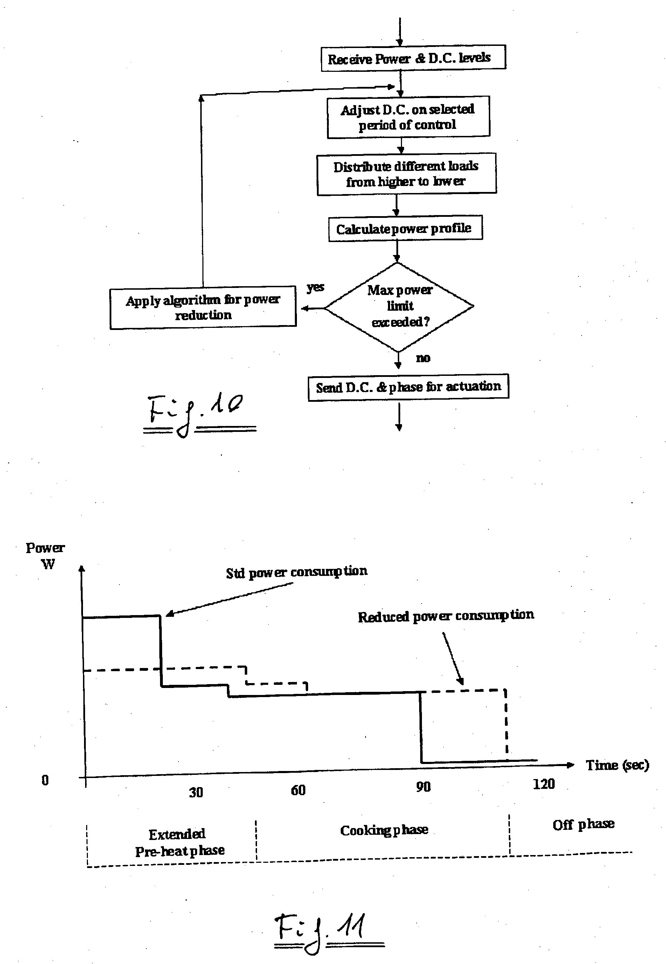

The synchroniser can operate in many different ways. For example, as shown in figure 9, each control sends to the synchroniser the information related to the duty cycle (D.C) that it needs to apply to the related load and the nominal load power. The synchroniser puts in a sequence all the different duty cycles starting from the one related to the load with higher power level. Then it organises them inside the selected period of control. In this way each D.C. is placed in a precise position inside the period of control avoiding unnecessary simultaneous activation of loads. At that point, the synchroniser is able to calculate the power profile for the next period of control. If there is a maximum power limit defined, the synchroniser verifies if this is exceeded. If yes, it can apply a method to reduce the maximum power limit, for example by reducing proportionally the duty cycle of the loads, and repeat the process from D.C. re-organisation. If the limit does not exist or is not exceeded, the synchroniser sent back to the different controls the adjusted D.C. and the synchronisation information (for example the phase). This process is described in figure 10. The same results can be obtained using an integrated control for all the actuators. The synchroniser knows the power profile for the next periods of control and it is able to provide a "forecast" of the power consumption for the controlled actuators. In addition, if this information is combined with the data that each control has on its specific functionality, we can have a power consumption forecast extended for a longer period of time (for example hours or days). For example, if we have an oven where the user has selected a cooking function, a cavity temperature and a duration, the system is able to provide a power consumption forecast for a long period. Additionally, each product control knows how it is possible to reduce the instantaneous power consumption based on the assessed power consumption forecast. For example, the oven control can reduce the instantaneous current absorption during the "preheat phase", for example using one heating element less but increasing the heat up time. In this way, the system can provide, in addition to the "normal power consumption forecast", also a potential "reduced power consumption forecast" as shown in the attached figure 11. This information can be used by a control circuit (for example a power control box) to plan a reduction on the power consumption peak of a group of appliances when required.

When a centralised control unit, or power control box, is used to coordinate more appliances in a house, the algorithm running inside such control unit takes in considerations many factors to optimise the levelling feature. The information can have more sources such as power distribution network, a power meter device (installed to read the energy consumption of some/all devices switched on), and a new generation of appliances able to communicate with external device like power control box, and to apply power levelling itself with a low degradation of their performances.

The power control box collects all the information coming from each appliance to elaborate the house power forecast and it can also negotiate the more suitable power profiles with every appliance to level the total power absorption.

The information collected can be delivered to the distribution power network, to give a general forecast of power consumption and to allow the utility company to actuate the power levelling, managing each house connected.

The utility company can suggest reducing the power consumption during some hours of the day, by offering a dedicated contract or special tariffs to the customer. The power control box is able to elaborate the energy directives coming from the power network and apply them negotiating the consumption forecast with the appliances and following the priorities chosen by customer.

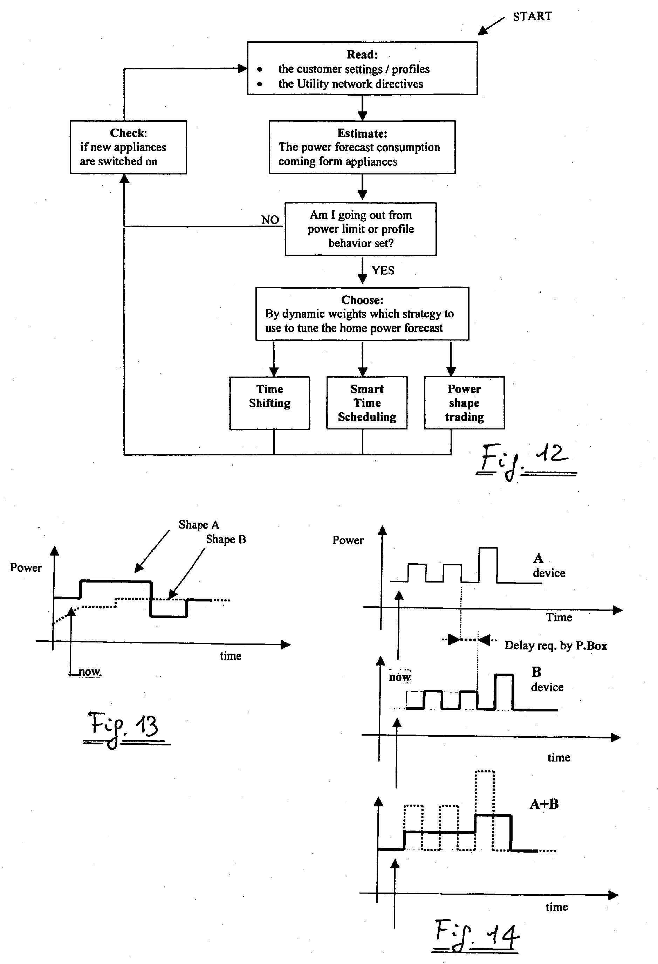

Figure 12 explains the algorithm for reaching the objective.

According to a further embodiment of the invention, the levelling of power consumption can be obtained through a proper time scheduling of the appliances. All white appliances, performing their working cycles, have some functionality that can be delayed to save energy. A typical example is the refrigerator or freezer. This appliance must perform one or some defrost cycles during the day. This particular functionality gives the possibility to save energy scheduling such defrost during the night or when energy is available at low cost. According to such embodiment, the power control box can ask to inhibit more functionality of some appliances in order to achieve power saving in critical situation: the ice producer can be stopped, the same for freezer compressor or washer spinning cycle for short time and so on.

According to a further embodiment of the invention, each appliance is asked to elaborate a power saving forecast. So, the power control box can ask every appliance to give more forecast shapes, over the default power shape, depending from the program presently running. The levelling algorithm on the power control box can command, in real time, the appliance to switch from different power shapes if it is unable to obtain a good levelling only by time shifting or time scheduling.

With reference to figure 13, the diagram gives and idea of two different forecasts of power demand coming from the same appliance. The B shape (in dotted line) requires less power consumption compared to A. Changing the power curve from A to B will modify the performance of the appliance involved. An electric oven, for example, can take more time to reach the correct temperate set, but it is always able to cook the food. So, the power saving curve B on the graph is acceptable in emergency situation.

From the user interface point of view, the power control box can interact with the customer through a display (LCD or usual personal computer running a dedicate software) to re-define the default setting or change the algorithm or devices priorities. It is also possible to schedule the working time of some appliances by hours of the day/days of the week etc.

Another example of power forecast requirement is shown in figure 14. The upper graph for the A device explains the timing and level of power forecast needed to perform the program chosen by the user. The shape of the graph explains how the power consumption will evolve if the customer leaves the device to follow the program selected. We consider that there are two similar devices, A and B, running the same program at same time, but having a different starting time. By summing the two equal graphs we can see the shape of the total power consumption following the dotted line on the bottom graph of figure 14. There are several peaks and other instants where the power demand is low because the two devices aren't well synchronised. A possible action, in this situation, for the levelling algorithm running inside the power control box is to negotiate with the device B to delay his power peaks when the A device requires the minimal level of energy. The delayed "thick" shape on graph B where the appliance is well synchronised with the appliance A is shown in the middle graph of figure 14 and the total power shape needed to run the two devices is shown on bottom graph with thick line. Comparing the two cumulative power curves, the first dotted and the other thick (on the bottom graph), it's possible to detect the advantage of using levelling technology. As the utility company can save money without activate more power plants to supply strong peaks of power demand, the user can stay inside his power limits and reduce the possibility of dangerous blackout overcoming limits inside his house. The algorithm of the power control box can check the effective availability of energy before switching on a new appliance in order to avoid black out.

The distribution power system manages the power distribution like an on line stock. Its goal is to avoid the power peaks minimising at the same time the impact on the user (and avoiding the shut-off of entire quarter). It can reach its objective exploiting two main concepts: the advance management of the forecasted power (forecasted power availability on one side and forecasted power request on the other side) and the collaboration with appliances (power absorption levelling and power reduction).

## Claims

1. Process for managing and curtailing power demand of a plurality of appliances, each appliance having an user interface for setting working parameters of the appliance, **characterised in that** it comprises the steps of assessing for each appliance an energy consumption profile corresponding to its setting, comparing the energy consumption profiles in order to check if their sum leads to one or more peaks in power demand, and providing one or more new energy consumption profiles in order to level and/or reduce the total power absorbed by said appliances.

2. Process according to claim 1, in which the appliances are controlled through an on-off switching, **characterised in that** appliances are synchronised for organising the on-off switching of single appliances in order to limit peaks of power demand.

3. Process according to claim 2, in which each on-off switching is based on a duty cycle, **characterised in that** a synchroniser puts in a sequence all the different duty cycles starting from the one related to the load with higher power level, then organises them inside a selected period of control, each duty cycle being placed in a precise position inside the period of control avoiding unnecessary simultaneous activation of loads.

4. Process according to claim 1, **characterised in that** at least one of the new energy consumption profile is based on a delayed switching on of appliances.

5. Process according to any of the preceding claims, **characterised in that** on the basis of the new levelled energy consumption profiles, a signal related to future energy consumption profiles is provided, such signal being adapted to be used by a control unit which supervises more appliances and/or utility in order to have a forecast for future total energy consumption on the mains.

6. System for managing and curtailing power demand of a plurality of appliances, each appliance having an user interface connected to a control unit for setting working parameters of the appliance, **characterised in that** the control unit is adapted to assess, for each appliance, an energy consumption profile corresponding to its setting, the control unit being adapted to compare the energy consumption profiles in order to check if their sum leads to one or more peaks in the power demand and to provide one or more new energy consumption profiles in order to level or reduce the total power absorbed by said appliances.

7. System according to claim 6, in which the appliances are controlled through an on-off switching, **characterised in that** the control circuit is adapted to synchronise appliances for organising the on-off switching of single appliances in order to limit peaks of energy demand.

8. System according to claim 7, in which each on-off switching is based on a duty cycle, **characterised in that** a synchroniser is adapted to put in a sequence all the different duty cycles starting from the one related to the load with higher power level, and it is adapted to organise them inside the selected period of control, each duty cycle being placed in a precise position inside the period of control avoiding unnecessary simultaneous activation of loads.

9. System according to claim 6, **characterised in that** the control unit is adapted to provide one or more new energy consumption profiles based on a delayed switching on of appliances.

10. System according to any one of claims 6-9, characterised din that the control unit is adapted to provide, on the basis of the new levelled energy consumption profiles, a signal related to future energy consumption profiles, such signal being adapted to be used by a control unit supervising more appliances and/or utility company in order to have a forecast for future total energy consumption on the mains.

## Patentansprüche

1. Vorgang zum Verwalten und zum Begrenzen des Leistungsbedarfs mehrerer Geräte, wobei jedes Gerät eine Benutzerschnittstelle zum Einstellen von Betriebsparametern für das Gerät aufweist, **dadurch gekennzeichnet, dass** es die folgenden Schritte umfasst: Auswerten eines Energieverbrauchsprofils für jedes Gerät entsprechend seiner Einstellung, Vergleichen der Energieverbrauchsprofile zwecks Prüfung, ob ihre Summe zu einer oder mehreren Spitzen im Leistungsbedarf führt, und Bereitstellen eines oder mehrerer neuer Energieverbrauchsprofile, um die von den Geräten aufgenommene Energie auszugleichen und/oder zu verringern.

2. Vorgang nach Anspruch 1, wobei Geräte durch Ein-/Ausschalten gesteuert werden, **dadurch gekennzeichnet, dass** Geräte zum Einrichten des Ein-/Ausschaltens einzelner Geräte synchronisiert werden, um Spitzen im Leistungsbedarf zu beschränken.

3. Vorgang nach Anspruch 2, wobei jedes Ein-/Ausschalten auf einer Einschaltdauer basiert, **dadurch gekennzeichnet, dass** ein Synchronisiergerät alle verschiedenen Einschaltdauern in eine Reihenfolge setzt, angefangen mit der, die sich auf die Last mit der höheren Leistungsstufe bezieht, und sie dann innerhalb eines ausgewählten Zeitraums einrichtet, wobei jede Einschaltdauer in einer genauen Position innerhalb des Zeitraums platziert wird, um ein unnötiges gleichzeitiges Aktivieren von Lasten zu verhindern.

4. Vorgang nach Anspruch 1, **dadurch gekennzeichnet, dass** wenigstens eines der neuen Energieverbrauchsprofile auf einem verzögerten Einschalten der Geräte basiert.

5. Vorgang nach einem der vorhergehenden Ansprüche, **dadurch gekennzeichnet, dass** auf der Grundlage der neuen ausgeglichenen Energieverbrauchsprofile ein Signal bezogen auf zukünftige Energieverbrauchsprofile bereitgestellt wird, wobei dieses Signal angepasst ist, von einem Steuergerät eingesetzt zu werden, das weitere Geräte und/oder Versorgungsunternehmen überwacht, um eine Prognose für den zukünftigen Gesamt-Netzstromverbrauch zu haben.

6. System zum Verwalten und Begrenzen des Leistungsbedarfs mehrerer Geräte, wobei jedes Gerät eine mit einem Steuergerät verbundene Benutzerschnittstelle zum Einstellen von Betriebsparametern für das Gerät aufweist, **dadurch gekennzeichnet, dass** das Steuergerät angepasst ist, für jedes Gerät ein Energieverbrauchsprofil entsprechend seiner Einstellung auszuwerten, wobei das Steuergerät angepasst ist, die Energieverbrauchsprofile zu vergleichen, um zu prüfen, ob ihre Summe zu einer oder mehreren Spitzen im Leistungsbedarf führt, und um ein oder mehrere neue Energieverbrauchsprofile bereitzustellen, um die von den Geräten aufgenommene Energie auszugleichen und/oder zu verringern.

7. System nach Anspruch 6, wobei die Geräte durch ein Ein-/Ausschalten gesteuert werden, **dadurch gekennzeichnet, dass** der Steuerschaltkreis angepasst ist, Geräte zu synchronisieren, um das Ein-/Ausschalten einzelner Geräte einzurichten, um Spitzen in der Leistungsanforderung zu beschränken.

8. System nach Anspruch 7, wobei jedes Ein-/Ausschalten auf einer Einschaltdauer basiert, **dadurch gekennzeichnet, dass** ein Synchronisiergerät angepasst ist, alle verschiedenen Einschaltdauern in eine Reihenfolge zu setzen, angefangen mit der, die sich auf die Last mit der höheren Leistungsstufe bezieht, und angepasst ist, sie innerhalb des ausgewählten Zeitraums einzurichten, wobei jede Einschaltdauer in einer genauen Position innerhalb des Zeitraums platziert wird, um ein unnötiges gleichzeitiges Aktivieren von Lasten zu verhindern.

9. System nach Anspruch 6, **dadurch gekennzeichnet, dass** das Steuergerät angepasst ist, ein oder mehrere neue Energieverbrauchsprofile auf der Grundlage von verzögertem Einschalten von Geräten bereitzustellen.

10. System nach einem der Ansprüche 6 - 9, **dadurch gekennzeichnet, dass** das Steuergerät angepasst ist, auf der Grundlage der neuen ausgeglichenen Energieverbrauchsprofile ein Signal für zukünftige Energieverbrauchsprofile bereitzustellen, wobei dieses Signal angepasst ist, von einem Steuergerät eingesetzt zu werden, das weitere Geräte und/oder Versorgungsunternehmen zu überwachen, um eine Prognose für den zukünftigen Gesamt-Netzstromverbrauch zu haben.

## Revendications

1. Procédé de gestion et de réduction de la demande d'énergie d'une pluralité d'appareils, chaque appareil ayant une interface utilisateur pour régler les paramètres de travail de l'appareil, **caractérisé en ce qu'**il comprend les étapes d'évaluation pour chaque appareil d'un profil de consommation d'énergie correspondant à son réglage, de comparaison des profils de consommation d'énergie afin de vérifier si leur somme mène à un ou plusieurs pics en demande d'énergie et de fourniture d'un ou plusieurs profils de consommation d'énergie nouveaux afin de niveler et/ou réduire l'énergie totale absorbée par lesdits appareils.

2. Procédé selon la revendication 1, dans lequel les appareils sont commandés par une commutation marche-arrêt, **caractérisé en ce que** les appareils sont synchronisés pour organiser la commutation marche-arrêt des appareils individuels afin de limiter les pics de demande d'énergie.

3. Procédé selon la revendication 2, dans lequel chaque commutation marche-arrêt est basée sur un cycle de marche, **caractérisé en ce qu'**un synchroniseur place dans une séquence tous les cycles de marche différents en partant de celui se rapportant à la charge de niveau d'énergie plus élevé, puis les organise dans une période de commande choisie, chaque cycle de marche étant placé dans une position précise au sein de la période de commande en évitant une activation simultanée inutile des charges.

4. Procédé selon la revendication 1, **caractérisé en ce qu'**au moins l'un des nouveaux profils de consommation d'énergie est basé sur une commutation de marche retardée d'appareils.

5. Procédé selon l'une quelconque des revendications précédentes, **caractérisé en ce que**, sur la base des nouveaux profils de consommation d'énergie nivelés, un signal apparenté à des profils de consommation d'énergie futurs est fourni, ce signal étant à même d'être utilisé par une unité de commande qui supervise plus d'appareils et/ou un réseau afin d'avoir une prévision pour la consommation d'énergie totale future sur le secteur.

6. Système de gestion et de réduction de la demande d'énergie d'une pluralité d'appareils, chaque appareil ayant une interface utilisateur qui est connectée à une unité de commande pour régler les paramètres de travail de l'appareil, **caractérisé en ce que** l'unité de commande est à même d'évaluer, pour chaque appareil, un profil de consommation d'énergie correspondant à son réglage, l'unité de commande étant à même de comparer les profils de consommation d'énergie afin de vérifier si leur somme mène à un ou plusieurs pics de demande d'énergie et pour fournir un ou plusieurs profils de consommation d'énergie nouveaux afin de niveler ou de réduire l'énergie totale absorbée par lesdits appareils.

7. Système selon la revendication 6, dans lequel les appareils sont commandés par une commutation marche-arrêt, **caractérisé en ce que** le circuit de commande est à même de synchroniser les appareils afin d'organiser la commutation marche-arrêt d'appareils individuels pour limiter des pics de demande d'énergie.

8. Système selon la revendication 7, dans lequel chaque commutation marche-arrêt est basée sur un cycle de marche, **caractérisé en ce qu'**un synchronisateur est à même de placer dans une séquence tous les différents cycles de marche en partant de celui apparenté à la charge de niveau d'énergie plus élevé et est à même de les organiser au sein de la période de commande choisie, chaque cycle de marche étant placé en position précise à l'intérieur de la période de commande en évitant une activation simultanée inutile de charges.

9. Système selon la revendication 6, **caractérisé en ce que** l'unité de commande est à même de fournir un ou plusieurs profils de consommation d'énergie nouveaux sur la base d'une commutation retardée en marche d'appareils.

10. Système selon l'une quelconque des revendications 6 à 9, **caractérisé en ce que** l'unité de commande est à même de fournir, sur la base des profils de consommation d'énergie nivelés nouveaux, un signal qui se rapporte aux profils de consommation d'énergie futurs, ce signal étant à même d'être utilisé par une unité de commande supervisant plus d'appareils et/ou une société du réseau afin d'avoir une prévision de la consommation d'énergie totale future sur le secteur.
